# EUROPEAN PATENT SPECIFICATION

(11) **EP 2 509 294 B1**
(45) Date of publication and mention of the grant of the patent: **03.04.2013**
(21) Application number: 11161703.1
(22) Date of filing: 08.04.2011
(51) Int. Cl.: H04M 3/22, H04M 3/42

(54) **A telecommunication network bypass detection system with reduced counter detection risk**
Telekommunikationsnetz Umleitungserkennungssystem mit reduziertem Gegenerkennungsrisiko
Système de détection de contournement dans un réseau de télécommunication avec risque de contre-détection réduit

(43) Date of publication of application: 10.10.2012
(73) Proprietor: Meucci Solutions NV, 9050 Gent-Ledeberg (BE)
(72) Inventor: Van der Meeren, Guy, 9052, GENT (BE); Tuytte, Conrad, 9070, DESTELBERGEN (BE); De Bontridder, Lieven, 9500, GERAARDSBERGEN (BE); Philips, Peter, 1910, KAMPENHOUT (BE); Mouton, Kenneth, 9000, GENT (BE); Verlinde, Dirk, 8650, HOUTHULST (BE)
(74) Representative: IP Hills NV

(56) References cited:
- WO-A1-2010/099140
- WO-A1-2010/135000
- FR-A1- 2 938 392

## Description

### Field of the Invention

The present invention generally relates to a system for detection of an interconnect bypass in telecommunication networks, especially in wireless telecommunication networks such as for example of the type GSM, GPRS, UMTS or similar, but also in wired telecommunication networks.

### Background of the Invention

When a telecommunication network operator provides access from his network to a network of another telecommunication network operator and vice versa, both operators, by means of agreement or sometimes subject to regulatory requirements, set up a suitable interconnection facility which is subjected to extensive testing in order to assess technical reliability and the quality of service of the interconnection facility so that the agreed upon or regulatory standards are met. Next to the technical arrangements there are in many cases also interconnection charges that the telecommunication network operator receiving a call charges for the calls passing through the interconnection facility. When a calling party calls from another telecommunication network to the network of the telecommunication network operator of the receiving party, for example because the calling party is a client of another network operator than the receiving operator or because the calling party is abroad and is making use of a partnering network operator that provides roaming services for its network operator, this call has to pass through the interconnection facility.

Sometimes there are attempts to bypass the interconnection facilities of the network operator in an attempt to make money by avoiding at least a part of the interconnection charges. These attempts are made by bypass operators that reroute a part of the traffic of calling parties within the network of another operator to the network of the receiving operator without going through the interconnection facility. Generally these bypass operators make use of end user facilities from the receiving operator.

This leads to a direct loss of revenue for the receiving network operators and this leads to technical problems. First of all as the bypass operator uses end user facilities to provide a network interconnection. Furthermore the use of these end user facilities and the setup of a new call creates an additional interface. Therefor there is a serious risk of quality problems such as degraded quality of audio or data transmissions, interruptions during the call, a prolonged waiting time during the call initiation, unacceptable delays in the transmissions, .... Further, because of the bypass operators reroute the call by setting up a new call making use of end user facilities of the receiving operator, the CLI of the calling party will be replaced with the CLI of the new call. This leads to inconveniences for the receiving parties which receive an erroneous CLI, but can also have more serious safety issues involved when a call to emergency services or police is involved. Furthermore this also creates serious technical difficulties for automatic telephone switchboards that operate on the basis of the CLI of the incoming call.

A system for setting up test calls in a telecommunication network is known from for example WO99/01974 and W02008/071857. These call charge verification systems generate a series of calls between different sites on one or more networks to enable the network operator to check the billing procedure of the network. These systems however rely on collection of billing data produced by the operator in order to extract data, such as for example the CLI for analysis. Therefor these systems require access to sensitive data of the telecommunication network operator. This data is sensitive because it is related to the calling behaviour of its customers which might be subjected to privacy regulations or because it relates to billing information which is considered as commercial know how of the telecommunication network operator. These problems are especially relevant if the call charge verification system is operated by third parties that offer such system as a service to the telecommunication network operator. As then extensive access by these third parties to information of the telecommunication network operator requires specific interfaces to be developed to provide access to the billing information for each specific telecommunication network operator. This is time and resource intensive and makes it difficult to scale the verification system to multiple telecommunication network operators.

A known system that overcomes the abovementioned drawbacks is the Meucci system as described on their website: http://www.meucci-solutions.com. This system for detection of a bypass of an interconnect to a telecommunication network under test comprises means adapted to originate a test call to said telecommunication network under test from outside the telecommunication network under test and at least one receiver probe with a subscription for terminating said test call. Further this system comprises a control system configured to initiate the test call; receive from the receiver probe call information comprising a received calling line identification (CLI) of the test call; and analyse the received calling line identification (CLI) such that presence of the bypass can be detected. The Meucci system does not require an interface with the billing system as it obtains the received CLI of the test call from the receiver probe. However in this case difficulties can arise for detecting and disabling a bypass when the bypass operator makes use of the CLIR function in order to mask the calling line identification of their bypass equipment as will be explained in further detail below.

One problem with these systems that make use of test calls is that they are exposed to the risk of identification of their calling behaviour. In prior art systems the test calls are normally never picked up and are performed according to a fixed pattern of start time, ringing duration, etc, which may cause a suspicious calling pattern. Another problem is that the means to originate test calls and the subscriptions that terminate test calls may originate or terminate a large number of calls, such volume being suspicious. This creates the risk that the bypass operators can detect and identify the means for originating the test calls and/or the subscriptions used by the receiver probes used for receiving the test call. The bypass operator can then subsequently blacklist these specific means and/or subscriptions in order to avoid detection. In order to be effective afterwards parts of the system for making test calls, such as for example the receiver probe or the means for originating test calls, have to be reconfigured extensively, for example by providing them with new subscriptions for receiving or generating test calls, which is a slow process, which casts money and may require physical intervention such as for example replacing a SIM card.

There is known from FR2938392 a system which generates test calls which makes use of a forwarding mechanism to cascade client subscriptions implemented with SIM cards. This system decreases the risk of counter detection by increasing the number of subscriptions used as called party for the test calls, however the implementation of this system suffers from important limitations. as the cascading mechanism increases cost, complexity and decreases the ease of maintenance of such a system and presents difficulties in scaling up the number of such subscriptions. Even when the large number of SIM cards or customer subscriptions, for example five hundred, is not used at once in such a system, but for example are introduced into the system in a sequential manner this still requires a thorough documentation of the setup of the system and the available SIM cards or subscriptions for use in the system. Furthermore the proposed cascading mechanism with two or potentially even more stages presents specific problems. A subscription and its associated configuration to forward or deviate calls must be documented in a multitude of systems and database or otherwise they risk being wiped out when data quality and integrity checks are performed. The configuration of call forwards or deviations is not always stable. Setting up a call forward or deviation takes time at the setup of a call. A forward or deviation may be a pay for service which might generate costs on subscriptions used in the cascading mechanism, it might lead to transfer cost within an operator and it makes it difficult to use prepaid subscriptions. Also, when forwarding or deviating a call, in some cases the CLI is changed by the operator into the CLI of the subscription that is forwarding or deviating the call, making the whole setup useless. When a subscription used in such a system must be replaced by a new subscription, for example because it was detected by a bypass operator, this requires a multitude of operations as all documentation about the state of the system needs to be updated and also the configuration of the forwarding or deviation mechanism needs to be adapted accordingly.

As such there is a need for a system that can provide real time information about the availability of a bypass. This system should be able to be operated by third parties and should not require access to sensitive data of the telecommunication network operator. The system should also have a decreased risk of counter-detection by a bypass operator and should enable a simple configuration, allow ease of maintenance and improved scalability.

### Summary of the Invention

According to the invention there is provided a system for detection of a bypass of an interconnect to a telecommunication network under test, said system comprising:
- means adapted to originate a test call to said telecommunication network under test from outside the telecommunication network under test;
- at least one receiver probe with a terminating subscription for terminating said test call; and
- a control system configured to:
   - initiate the test call;
   - receive from the receiver probe call information comprising a received calling line identification of the test call; and
   - analyse the received calling line identification such that presence of the bypass can be detected,
   CHARACTERIZED IN THAT
- said system further comprises:
   - a non-cascaded set of virtual numbers being configured such that said test calls are terminated in one stage on said terminating subscription; and
   - means configured to manipulate calling line identifications, and in that
- said control system is further configured:
   - to use said non-cascaded set of virtual numbers as called party of said test calls; and
   - to set up test calls towards said set of virtual numbers from means configured to manipulate calling line identifications through said means to originate a test call.
- said set of virtual numbers (81) or manipulated CLI being divided in subsets that are used consecutively in a rotating order.

This system according to the invention is capable of decreased risk of counter-detection by a bypass operator because it can make use of a large amount of virtual numbers and manipulated CLI. Furthermore this makes it impossible for the operator of a bypass to identify the terminating subscription and/or the means for originating test calls and subsequently blacklist them, as there are provided means to manipulate the calling line identification which prevent detection of the means for originating a test call and there are provided virtual numbers as called parties which prevent detection of the terminating subscription. As both the called party and calling party of the test call are available in combination to a bypass operator, this means that if the bypass operator is able to identify one of both as being used in a system for detection of a bypass automatically the other one is also subject to detection. It is therefore essential that both the called party and calling party are provided with mechanisms to reduce the risk of detection, respectively the non-cascaded set of virtual numbers and the means configured to manipulate calling line identifications. As such it is also important that both the called party numbers (virtual numbers) and the calling party numbers (manipulated CLI) exist in large quantities to avoid detection, because as explained above, the detection of one would inevitably and immediately lead to the detection of the other.

Optionally said rotating order is randomized or usage of virtual numbers within said subsets of virtual numbers is randomized.

All these measures decrease the risk that the bypass operator will be able to link the calling behaviour of the bypass detection system to a specific number and especially to the subscriptions of the receiver probes for terminating the test calls as the number of these receiver probe subscriptions is not visible at all for any carrier or bypass operator.

It is also essential that use is made of a non-cascaded set of virtual numbers instead of a cascaded set of numbers associated with a cascaded set of subscriptions comprising two or more stages of cascading, because otherwise scaling up the amount of numbers to a level that is sufficient to avoid counter detection by the bypass operator would involve extensive and complex operations and a large configuration overhead that result in extensive maintenance, extensive documentation requirements and difficult and error prone configuration.

This system further does not require complex computations nor extensive amounts of data to be able to detect the existence of a bypass. It only needs to analyse the received calling line identification (CLI). The analysis can be implemented in a simple manner, such as for example determining whether the received CLI is from a call that originated from within the telecommunication network under test by analysing the prefix of the received CLI for the presence of a prefix belonging to the numbering plan of the telecommunication network under test.

According to an embodiment of the invention said means configured to manipulate calling line identifications comprise:
- end user subscriptions with the possibility to manipulate the CLI; or
- a call generator connected to a telecommunication network on a network level.

According to a further embodiment of the invention said means to originate a test call comprises said means configured to manipulate calling line identifications.

According to an alternative embodiment the means configured to manipulate calling line identifications route test calls through said means to originate a test call.

According to still a further embodiment the means for originating said test call comprise an originating subscription to an originating network outside the telecommunication network under test, that is configured to be routed to said virtual numbers, and wherein test calls are set up from said means configured to manipulate calling line identifications with different calling line identifications to said originating subscription for enabling test calls routed through the originating network but not necessarily generating a calling line identification identifying the originating network.

This reduces the risk that a bypass operator blacklists all calls with a CLI identifying a specific network, or blacklists an entire originating network or an interconnect with a carrier, of which the bypass operator suspects it serves as originating network for test calls of a bypass detection system.

According to an embodiment of the invention said set of non-cascaded virtual numbers is implemented as:
- multiple Subscriber Number options on single physical ISDN BRI fixed line;
- multiple PBX numbers on a single physical ISDN PRI line;
- multiple Mobile Subscriber Integrated Service Digital Network numbers on a single physical SIM card subscription; or
- multiple numbers routed to a single IMSI (International Mobile Subscriber Identity) by means of the routing table.

This allows the non-cascaded virtual numbers to be set up with technology that is readily available in most telecommunication networks.

According to still a further embodiment said set of virtual numbers comprises one or more of the following:
- re-used and unused numbers;
- non-consecutive numbers; and
- numbers from multiple geographical areas in the case of a fixed line network or multiple network prefixes in the case of mobile networks.

According to a further embodiment the set of virtual numbers is renewed regularly.

In this way the risk that these virtual numbers are correlated with test call behaviour is reduced.

According to a preferred embodiment said terminating subscription is configured with calling line identification restriction override (CLIRO).

This advantageously enables a simple and robust system for detection of a bypass that is able to detect a bypass even if the bypass operator makes use of a calling line identification restriction (CLIR) function in order to hide the CLI from detection. This enables to identify and subsequently disable the subscriptions that are being used in a bypass even if the bypass operator makes use of the CLIR function. When third parties provide the system for detection of a bypass as a service to a telecommunication network operator this requires neither access to sensitive data like for example billing date nor complex technical interfaces to provide that access. The third party only requires a subscription configured with CLIRO for terminating the test call.

### Brief Description of the Drawings

Fig. 1 illustrates an embodiment according to the invention without the presence of a bypass;

Fig. 2 illustrates the embodiment according to Figure 1 with the presence of a bypass;

Fig. 3 illustrates an alternative embodiment according to the invention without the presence of a bypass; and

Fig. 4 illustrates the embodiment according to Figure 3 with the presence of a bypass.

### Detailed Description of Embodiment(s)

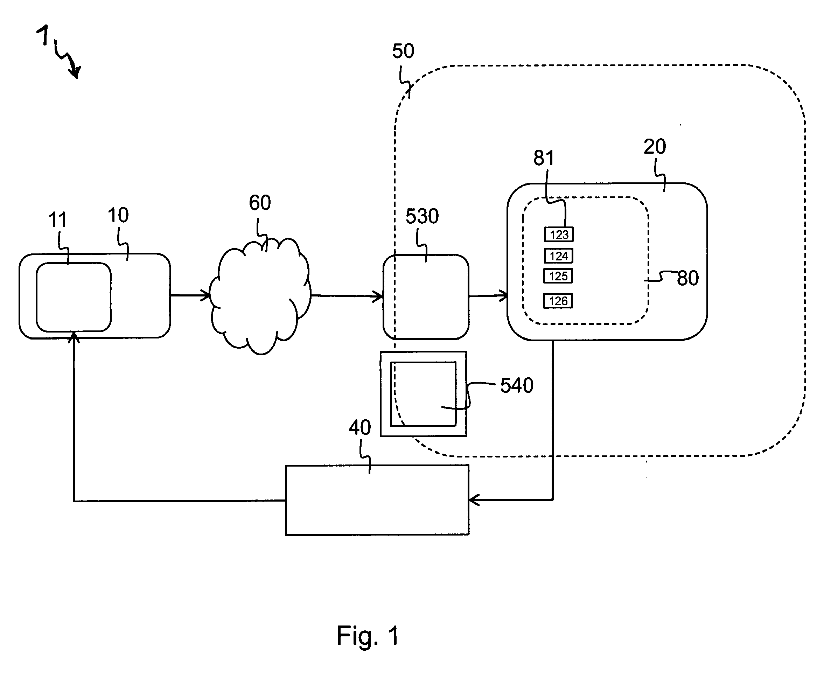

Figure 1 shows a system 1 for detection of a bypass of an interconnect 530 to a telecommunication network 50 under test. The system 1 according to the invention comprises a means 10 to originate a test call to said telecommunication network 50 under test from outside the telecommunication network 50 under test. This means 10 can be a suitable sender probe such as for example a GSM mobile phone or any other type of device capable of initiating a call on a predetermined outside telecommunication network other than the telecommunication network 50 of the network operator that is undertaking the investigation regarding the presence of a bypass of an interconnect 530, such as for example calling cards, a telephone number providing access to voip systems, call back mechanisms, any type of pc originating calls, a suitable subscription to mobile networks such as for example a SIM card, wireline networks or call generators directly connected to telecommunication network equipment. The means 10 can comprise for example a fixed line subscription in the UK "+44 20 1234 5678" and the telecommunication network 50 under test can for example be a telecommunication network of a Belgian mobile operator with a numbering plan with a 474 prefix, this means "+32 474 xxx xxx". The means 10 is for this purpose connected to a suitable control system 40 which enables to initiate the test call according to instructions received from this control system 40. The control system 40 is for example a suitably programmed computer that is directly connected to the means 10, but it might also be a remote computer system that is connected to the means 10 by means of a suitable network interface, such as for example a LAN or the internet, to enable exchange of instructions and/or data through this networks. It is clear that the system 1 for detection of a bypass is not limited to a system with only one means 10, it can however comprise any suitable number of means 10 dispersed among any suitable number of outside telecommunication networks, such as for example eight means 10 for different telecommunication networks in France and three means 10 for roaming telecommunication network partners in Ghana.

As can be seen in Figure 1 the bypass detection system 1 also comprises a receiver probe 20. This receiver probe 20 can for example also be a GSM mobile phone or any other type of device with a subscription for terminating the test call. The receiver probe 20 can for example comprise a subscription to the telecommunication network 50 under test "+32 474 123 456". The receiver probe 20 is also connected to a suitable control system 40. The control system 40 receives from the receiver probe 20 call information comprising a received calling line identification (CLI) of the test call. It is clear that the system 1 is also not limited to a system with only one receiver probe 20. It can comprise any suitable number of receiver probes 20 with a subscription for terminating test calls.

The call information comprises a received CLI of the test call and optionally other data relating to the call such as for example the time and date the test call was exactly received, the time and date at which the test call started ringing, the time and date at which the test call was terminated, an indicator for whether the test call was picked up, the phone number associated with the means 20, the presentation indicator, ....

As shown in Figure 1 when no bypass is present the control system 40 initiates the test call by activating the means 10 which subsequently originates the test call by calling the subscription to the telecommunication network 50 under test in the receiver probe 20. The test call is then sent to the telecommunication network 50 under test, for example optionally via one or more carriers 60. Subsequently the test call passes interconnect 530 of the telecommunication network 50 under test who routes the test call to the receiver probe 20. The receiver probe 20 then receives the incoming test call. It is not required for the receiver probe 20 to actually answer the test call. The control system 40 could for example be configured in such a way that it instructs means 10 to initiate the test call to the receiver probe 20 and to automatically disconnect the test call after allowing three rings. The control system 40 then receives from the predetermined receiver probe 20 call information that comprises a received CLI, which is transmitted just before or after the first ring, and optionally other data concerning the test call. This could be done for example by downloading the call information from the receiver probe 20 to the control system 40 or by transmitting it to the control system 40 in any suitable way, by for example a wired or wireless connection means. The control system 40 then analyses the received CLI.

This analysis can be executed as a simple comparison with the calling party number associated with means 10 that the control system 40 instructed to initiate the test call. In the case illustrated in Figure 1 where the test call passed through the interconnect facility 530 this received CLI, for example "+44 20 1234 5678", will match the calling party number, "+44 20 1234 5678", associated with means 10 and the control system 40 will be able to determine that for this test call no bypass was detected.

As the means 10 originates the test call from outside the telecommunication network 50 under test, the analysis can be done with even more reduced complexity and increased reliability. It can be determined whether the received CLI is a call that originated from within the telecommunication network 50 under test, this means an on net call, by for example analysing whether the prefix of the received CLI differs from the prefix associated with the numbering plan of the telecommunication network 50 under test. If this analysis of the received CLI indicates the calling party of the test call is not from within the telecommunication network under test, no bypass was detected. Thus as soon as the analysis is able to ascertain that the received CLI does not belong to the numbering plan associated with the telecommunication network 50 under test, no bypass within the network under test was detected. In order to also take into account number portability the analysis could comprise a check if the received CLI comprises a number which is comprised in the number database of the telecommunication network 50 under test. If this is not the case, no bypass within the network under test was detected. In general, because the means 10 originates the test call from outside the telecommunication network 50 under test, the presence of a bypass can be detected if the received CLI belongs to a subscription to the telecommunication network 50 under test.

Another possibility for analysis is to check if the received CLI comprises the same country code as the country code associated the telecommunication network 50 under test. As the means 10 in many cases originates a test call from a country other than the one from the telecommunication network 50 under test this provides a tool for determining whether a bypass is present.

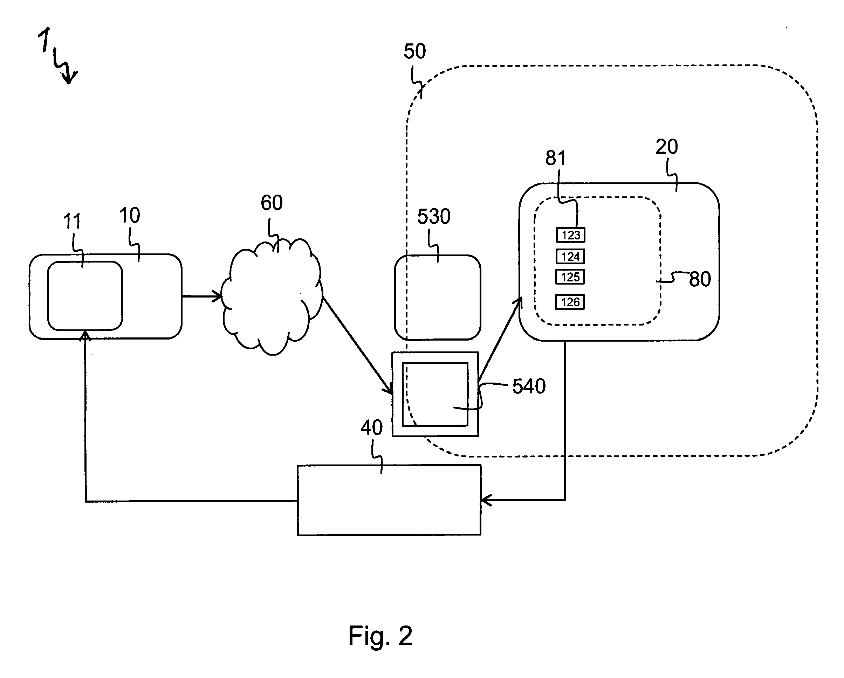

Figure 2 shows the same system 1 according to Figure 1 in operation, but now there is a bypass 540 in place and this bypass 540 reroutes the test call. When the control system 40 now initiates a test call between means 10 and receiver probe 20 and the call is rerouted optionally via one or more carriers 60 to the bypass 540 a detection of the bypass 540 is possible as explained below.

Such a bypass 540, also known as for example a GSM gateway or SIM box when it concerns a wireless telecommunication network or a leaky PBX when it concerns a wired telecommunication network, is operated by interconnection bypass operators that route part of the traffic to the telecommunication network 50 under test from outside telecommunication network 50 via for example a suitable internet interface with one of the carriers 60 towards a bypass 540 which normally makes use of a plurality of subscriptions, for example "+32 474 111 222", that operate within the telecommunication network 50 under test and which convert the incoming test call into a new call originating from a subscription to the telecommunication network 50, "+32 474 111 222", and to the same destination and as such bypass the interconnect 530. However when the control system 40 now receives the receiver call information from the receiver probe 20 that received the test call initiated from means 10, the received CLI, "+32 474 111 222" will not match the calling party number, "+44 20 1234 5678", associated with means 10. This is because instead of the calling party number of means 10, the calling party number of one of the subscriptions in the bypass 540, "+32 474 111 222", will be in the CLI received by receiver probe 20. The control system 40 is then able to assess that a bypass 530 is present.

As explained above because the means 10 originates the test call from outside the telecommunication network 50 under test, the presence of a bypass 540 can be detected if the received CLI belongs to a subscription to the telecommunication network 50 under test. This can be implemented by checking whether the received CLI comprises a prefix which belongs to the numbering plan of the telecommunication network 50 under test "+32 474 xxx xxx" or when to also take into account number portability by checking whether the received CLI comprises a number which is comprised in the number database of the telecommunication network 50 under test.

When in use the system 1 initiates multiple test calls that are routed to a terminating subscription 80 in receiver probe 20 as shown in Figures 1 and 2. According to an alternative embodiment (not shown) the receiver probe could comprise a plurality of subscriptions 80 for terminating test calls. However there are practical limits as to how many subscriptions 80 a receiver probe 20 can hold as each subscription has its associated physical components. If the receiver probe 20 comprises subscriptions in the form of SIM cards in the case of a wireless telecommunication network 50 under test sufficient physical connectors for introducing a SIM card and associated electronics must be present. Also in the case of a wired telecommunication network 50 under test, where the subscriptions might be implemented as suitable electronic circuits also this implementation requires sufficient physical electronics hardware to be present.

Even when the system 1 according to the invention makes use of a plurality of receiver probes 20 each comprising a plurality of physical subscriptions 80 for terminating the test calls, the volume of test calls and the long term use of the system 1 according to the invention increase the risk of detection by the operator of the bypass 540. As explained above the test calls are not required to be picked up for the system 1 to function and thus in order to diminish the cost of operating the system 1 and in order to shorten test call duration for increasing efficiency of the system 1 test calls are normally not picked up. This however would result in a specific long term calling behaviour towards these receiver probes 20 because the resulting answer/seizure ratio for a subscription used in this receiver probes 20 would clearly diverge from that of normal human calling behaviour. Furthermore, the total volume of calls to said subscription 80 would also be suspicious, as would be the range of different CLI calling that subscription.

According to an embodiment of the system 1 according to the invention as shown in Figures 1 and 2 the virtual numbers 81 are prevented from detection (explained in further detail below), and also the means 10 for originating test calls are prevented from detection because means 10 comprise end user subscriptions that allow to manipulate CLI or call generators or alternative means 11 to perform direct CLI manipulation. In this way the risk is reduced that the bypass operator can detect the called party and calling party from the test calls. When the bypass operator would detect a test call and blacklist one of the virtual numbers 81 or one of the CLIs generated by means 10 they can be very easily replaced. As the risk of being detected by a bypass operator can never be totally eliminated and as time goes by the chance of such a detection rises it is important to have an increased flexibility to swap phone numbers used in a system 1 according to the invention. Replacing a non-cascaded virtual number 81 can be performed efficiently as only the virtual number itself must be replaced and furthermore its configuration is very simple as there is only a single stage involved.

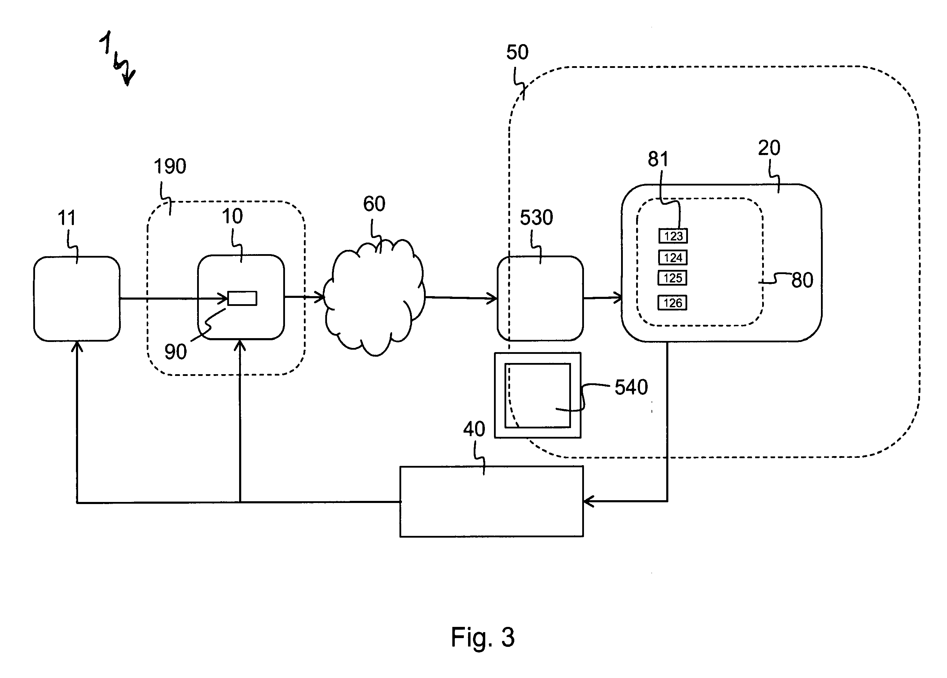

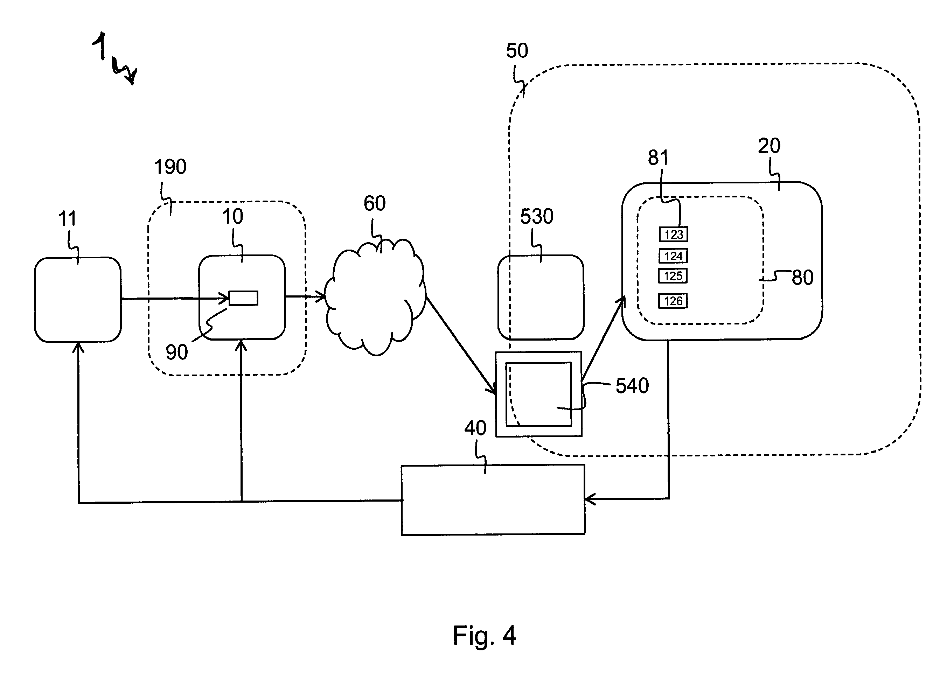

An alternative embodiment of the system 1 according to the invention as shown in Figures 3 and 4 advantageously decreases the risk for counter-detection and black listing as the terminating subscription 80 is prevented from detection by means of the virtual numbers 81 (explained in further detail below), and also the means 10 for originating test calls are prevented from detection. In order to accomplish this, the means 10 comprise an originating subscription 90 to an originating network 190 outside the telecommunication network 50 under test. This originating subscription 90 is configured to route the test call to the virtual numbers 81. The test calls are then setup from means 11 with different calling line identifications to said originating subscription 90 for enabling test calls routed through the originating network 190 but not necessarily generating a calling line identification identifying the originating network 190. This avoids that an operator of a bypass 540 will be able to detect what network 190 the originating subscription 90 is part of, which could lead to the operator of a bypass 540 blacklisting the entire originating network 190 or subscription 90 as in this embodiment the test calls would appear to be originated from outside the originating network 190, while still being routed through the originating network 190 in order to detect a bypass in the route of this originating network 190 to the telecommunication network 50 under test. Said means 11 configured to manipulate calling line identifications are for example a VolP subscription or a call generator connected to telecommunication network on a network level configured to manipulate calling line identifications. As shown in Figures 3 and 4 these means 11 configured to manipulate calling line identifications are outside the originating network 190 because in most fixed and mobile networks direct manipulation of the CLI is not possible.

In order to decrease this risk the system 1 according to the invention, as shown in Figures 1 and 2 also makes use of a set of virtual phone numbers 81 as called party of these test calls. This set of virtual numbers 81 terminates the incoming test calls directly on the terminating subscription 80. In this way the terminating subscription 80 is prevented from detection by the bypass 540 network as the phone number of this virtual number will be presented as called party instead of the number associated with the terminating subscription 80. It is important that this is a non-cascaded set of virtual numbers 81 instead of a cascaded set of numbers associated with a cascaded set of subscriptions, because otherwise scaling up the amount of numbers to a level that is sufficient to avoid counter detection by the bypass 540 operator would involve extensive and complex operations and a large configuration overhead that result in extensive maintenance, extensive documentation requirements and difficult and error prone configuration.

According to the embodiments of the invention as shown in Figures 1 to 4, the set of virtual numbers 81 is implemented as a set of numbers available on the terminating subscription 80. This can for example be implemented by making use of Multiple Subscriber Number options on single physical ISDN BRI fixed line, by making use of multiple PBX numbers on a single physical ISDN PRI line, or by populating by means of the databases or the IN Platform multiple Mobile Subscriber Integrated Service Digital Network numbers on a single physical SIM card subscription identified by its International Mobile Subscriber Identity (IMSI). As, for example in a mobile telecommunication context, the MSISDN numbers defined on an IMSI are an attribute defined on this IMSI in the HLR such an operation does not require any physical intervention and a swap can thus be executed without unnecessary delays.

It is clear that these multiple virtual numbers 81 are associated with a single physical entity, such as a physical line in a fixed line telecommunication context or a SIM in a mobile telecommunication context, in a non-cascaded configuration. This means that no additional means or configurations, such as for example forwarding mechanisms, need to be implemented to terminate test calls to these virtual numbers 81 in one stage on subscription 80. In this way, when number swapping would be required, for example because one or more of the virtual numbers is detected by a bypass operator, the only operation that needs to be performed is a swap of the respective virtual number. This also allows for a simple setup of the system 1 that doesn't require extensive documentation and configuration as there are no multiple levels of cascading and associated cascading mechanisms and corresponding configuration thereof is involved. The non-cascaded setup as described above even prohibits the setup of multiple levels of cascading on a technical level.

According to an alternative embodiment, these non-cascaded virtual numbers 81 could also be created in the HLR of a telecommunication network, for example the telecommunication network 50 under test. A preferred way of terminating test calls directly, this means in one stage, on the terminating subscription 80 is by making use of the routing tables to terminate these virtual numbers 81 to the terminating subscription 80. In this way call forwarding or deviation is avoided and not cascading subscriptions are needed. Although in most telecommunication networks such forward function is readily available, call forwarding configuration is not always stable, costs a lot of time to set up and could incur costs. So setting up and configuration of these virtual numbers 81 does not require extensive resources neither does scaling up to a scale that decreases the risk of counter detection does not involve the cost and resources that would be associated with a physical implementation. Also reconfiguring the system, for example in the event that one of the virtual subscriptions was blacklisted by a bypass operator does not involve physical interference with the system 1 and because of the non-cascaded setup does not require any additional operations but the swap of the virtual numbers. As explained above this allows for a system 1 that does not require extensive documentation and configuration.

In order to further decrease the risk of counter detection by for example operators of the bypass 540 the set of virtual numbers or manipulated CLI could optionally be a mix of re-used and unused numbers, non-consecutive numbers, and numbers from multiple geographical areas in the case of a fixed line network or multiple network prefixes in the case of mobile networks. Another mechanism is regular renewal of the set of virtual numbers 81 or manipulated CLI in use or dividing the set of virtual numbers 81 or manipulated CLI in subsets of virtual numbers that are used consecutively in a rotating order, preferably a randomized rotating order. Still a further mechanism is the randomisation of the usage of virtual numbers or manipulated CLI within a specific set of virtual numbers 81 or manipulated CLI. All these measures make it difficult for an operator to allocate test calling behaviour to specific called parties, calling parties or originating networks as the number of numbers used is sufficiently elevated in order to spread the risk of detection and the systematic calling behaviour of the system 1 according to the invention when making multiple test calls is randomized which makes it more difficult to counter-detect the patterns of the test calling behaviour.

When using a system 1 according to the invention there exists a risk that the bypass 540 operator makes use of the CLIR function such that the system 1 would not be able to guarantee the detection of the presence and/or subsequent disabling of a bypass 540. The signals exchanged between telecommunication networks namely comprise two fields, a CLI field which contains the calling party telephone number and a presentation indicator (PI) which indicates whether the CLI can be shown or not. The PI has three states: "available" means that there is a CLI and it can be shown, "unavailable" means that there is no CLI present and "restricted" means that there is a CLI present, but it cannot be shown. When the bypass 540 operator enables the CLIR function for the subscriptions the bypass 540 makes use of, the last switch in the path will not pass on the CLI to the terminating subscription used in the receiver probe 20. A more detailed description of the CLIR function can for example be found in the ITU CCITT I.251.4 specification or the 3GPP TS 24.081 specification.

Therefore the system according to the invention makes use of a receiver probe 20 that comprises a terminating subscription 80 configured with a calling line identification restriction override (CLIRO) function. This is a feature implemented in the equipment of the telecommunication network 50. The feature will instruct the final switch in the path of the test call to ignore the PI if it is set to "restricted" and still pas on the CLI to the terminating subscription of the receiver probe 20. Then, even if the bypass 540 makes use of a CLIR function the receiver probe 20 will always be able to detect the CLI of the incoming test call. This will enable the system 1 to detect and/or subsequently disable the specific subscriptions that are in use in the bypass 540.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A system (1) for detection of a bypass (540) of an interconnect (530) to a telecommunication network (50) under test, said system (1) comprising:
- means (10) adapted to originate a test call to said telecommunication network (50) under test from outside the telecommunication network (50) under test;
- at least one receiver probe (20) with a terminating subscription (80) for terminating said test call; and
- a control system (40) configured to:
• initiate the test call;
• receive from the receiver probe (20) call information comprising a received calling line identification, CLI, of the test call; and
• analyse the received calling line identification, CLI, such that presence of the bypass (540) can be detected,
**CHARACTERIZED IN THAT**
- said system (1) further comprises:
• a non-cascaded set of virtual numbers (81) being configured such that said test calls are terminated in one stage on said terminating subscription (80); and
• means (11) configured to manipulate calling line identifications , CLI, and **in that**
- said control system (40) is further configured:
• to use said non-cascaded set of virtual numbers (81) as called party of said test calls; and
• to set up test calls towards said set of virtual numbers (81) from said means (11) configured to manipulate calling line identifications, CLI, through said means (10) to originate a test call,
- said set of virtual numbers (81) or manipulated CLI being divided in subsets that are used consecutively in a rotating order.

2. A system according to claim 1, wherein said rotating order is randomized.

3. A system according to claim 1 or 2, wherein usage of virtual numbers (81) within said subsets of virtual numbers (81) is randomized.

4. A system according to any of the preceding claims, wherein said means (11) configured to manipulate calling line identifications, CLI, comprise:
- end user subscriptions with the possibility to manipulate CLI; or
- a call generator connected to a telecommunication network on a network level.

5. A system according to any of the claims 1 to 4, wherein said means (10) to originate a test call comprises said means (11) configured to manipulate calling line identifications, CLI.

6. A system according to any of the claims 1 to 4, wherein said means (11) configured to manipulate calling line identifications, CLI, route test calls through said means (10) to originate a test call.

7. A system according to claim 6, wherein the means (10) for originating said test call comprise an originating subscription (90) to an originating network (190) outside the telecommunication network (50) under test, that is configured to be routed to said virtual numbers (81), and wherein test calls are set up from said means (11) configured to manipulate calling line identifications, CLI, with different calling line identifications, CLIs, to said originating subscription (90) for enabling test calls routed through the originating network (190) but not necessarily generating a calling line identification, CLI, identifying the originating network (190).

8. A system according to any of the preceding claims, wherein said non-cascaded set of virtual numbers (81) is implemented as:
- multiple Subscriber Number options on single physical ISDN BRI fixed line;
- multiple PBX numbers on a single physical ISDN PRI line;
- multiple Mobile Subscriber Integrated Service Digital Network numbers on a single physical SIM card subscription; or
multiple numbers routed to a single IMSI, International Mobile Subscriber Identity, by means of the routing table.

9. A system according to any of the preceding claims, wherein said set of virtual numbers (81) comprises one or more of the following:
- re-used and unused numbers;
- non-consecutive numbers; and
- numbers from multiple geographical areas in the case of a fixed line network or multiple network prefixes in the case of mobile networks.

10. A system according to any one of the preceding claims, wherein said set of virtual numbers (81) or manipulated CLI is renewed regularly.

11. A system according to any one of the preceding claims, wherein said terminating subscription (80) is configured with calling line identification restriction override, CLIRO.

## Patentansprüche

1. System (1) für die Erkennung eines Bypasses (540) einer Zusammenschaltung (530) mit einem Test-Telekommunikationsnetz (50), wobei das System (1) Folgendes umfasst:
- Mittel (10), die angepasst sind, um einen Testanruf an das Test-Telekommunikationsnetz (50) von außerhalb des Test-Telekommunikationsnetzes (50) zu generieren;
- wenigstens einen Empfangsprüfkopf (20) mit einem Abschlussabonnement (80) zum Abschließen des Testanrufes; und
- ein Steuersystem (40), das konfiguriert ist, um:
• einen Testanruf zu starten;
• vom Empfangsprüfkopf (20) Anrufinformationen zu empfangen, die eine Rufnummernanzeige CLI des Testanrufes umfassen; und
• die empfangene Rufnummernanzeige CLI zu analysieren, so dass das Vorhandensein des Bypasses (540) erkannt werden kann,
**dadurch gekennzeichnet, dass**
- das System (1) ferner Folgendes umfasst:
• einen nichtkaskadierten Satz virtueller Nummern (81), der so konfiguriert ist, dass die Testanrufe in einer Phase am Abschlussabonnement (80) abgeschlossen werden; und
• Mittel (11), die konfiguriert sind, um Rufnummernanzeigen CLI zu manipulieren, und dadurch, dass
- das Steuersystem (40) ferner konfiguriert ist, um
• den nichtkaskadierten Satz virtueller Nummern (81) als angerufenen Teil der Testanrufe zu verwenden; und
• Testanrufe zum Satz virtueller Nummern (81) ausgehend von den Mitteln (11), die konfiguriert sind, um Rufnummernanzeigen CLI zu manipulieren, über die Mittel (10) zum Generieren eines Testanrufes einzurichten,
- wobei der Satz virtueller Nummern (81) oder manipulierter CLI in Untergruppen geteilt wird, die nacheinander in rotierender Reihenfolge verwendet werden.

2. System nach Anspruch 1, wobei die rotierende Reihenfolge zufallsbedingt ist.

3. System nach Anspruch 1 oder 2, wobei die Verwendung virtueller Nummern (81) innerhalb der Untergruppen virtueller Nummern (81) zufallsbedingt ist.

4. System nach einem der vorhergehenden Ansprüche, wobei die Mittel (11), die konfiguriert sind, um Rufnummernanzeigen CLI zu manipulieren, Folgendes umfassen:
- Endbenutzerabonnements mit der Möglichkeit, CLI zu manipulieren; oder
- einen Anrufgenerator, der an ein Telekommunikationsnetz auf einer Netzebene angeschlossen ist.

5. System nach einem der Ansprüche 1 bis 4, wobei die Mittel (10) zum Generieren eines Testanrufes die Mittel (11) umfassen, die konfiguriert sind, um Rufnummernanzeigen CLI zu manipulieren.

6. System nach einem der Ansprüche 1 bis 4, wobei die Mittel (11), die konfiguriert sind, um Rufnummernanzeigen CLI zu manipulieren, Testanrufe über die Mittel (10) zum Generieren eines Testanrufes umleiten.

7. System nach Anspruch 6, wobei die Mittel (10) zum Generieren des Testanrufes ein Generierabonnement (90) an ein Generiernetz (190) außerhalb des Test-Telekommunikationsnetzes (50) umfassen, das konfiguriert ist, um zu den virtuellen Nummern (81) umgeleitet zu werden, und wobei Testanrufe von den Mitteln (11), die konfiguriert sind, um Rufnummernanzeigen CLI zu manipulieren, mit in Bezug auf das Generierabonnement (90) unterschiedlichen Rufnummernanzeigen CLIs eingerichtet werden, um Testanrufe, die über das Generiernetz (190) umgeleitet werden, zu ermöglichen, aber um nicht notwendigerweise eine Rufnummernanzeige CLI zu generieren, die das Generiernetz (190) identifiziert.

8. System nach einem der vorhergehenden Ansprüche, wobei der nichtkaskadierte Satz virtueller Nummern (81) ausgeführt ist als:
- mehrere Abonnentennummernoptionen an einer einzelnen physischen ISDN-Basisanschluss-Festnetzlinie;
- mehrere PBX-Nummern an einer einzelnen physischen ISDN-Primärmultiplexanschluss-Linie;
- mehrere Mobile-Subscriber-Integrated-Service-Digital-Network-Nummern an einem einzelnen physischen SIM-Karten-Abonnement; oder
mehrere Nummern, die zu einer einzelnen IMSI, International Mobile Subscriber Identity, mittels der Leitwegtabelle umgeleitet werden.

9. System nach einem der vorhergehenden Ansprüche, wobei der Satz virtueller Nummern (81) eines oder mehrere aus Folgendem umfasst:
- wiederverwendete und nichtverwendete Nummern;
- nicht aufeinanderfolgende Nummern; und
- Nummern von mehreren geografischen Gebieten im Fall eines Festnetzes oder mehreren Netzvorwahlen im Fall von Mobilnetzen.

10. System nach einem der vorhergehenden Ansprüche, wobei der Satz virtueller Nummern (81) oder manipulierter CLI regelmäßig erneuert wird.

11. System nach einem der vorhergehenden Ansprüche, wobei das Abschlussabonnement (80) mit einer Aufhebung der Rufnummernunterdrückung CLIRO konfiguriert ist.

## Revendications

1. Système (1) pour la détection d'un contournement (540) d'une interconnexion (530) à un réseau de télécommunication (50) à l'essai, ledit système (1) comprenant :
- des moyens (10) adaptés pour émettre un appel d'essai audit réseau de télécommunication (50) à l'essai à partir de l'extérieur du réseau de télécommunication (50) à l'essai ;
- au moins une sonde réceptrice (20) avec un abonnement de terminaison (80) pour terminer ledit appel d'essai ; et
- un système de commande (40) configuré pour :
• lancer l'appel d'essai ;
• recevoir, à partir de la sonde réceptrice (20), des informations d'appel comprenant une identification de ligne appelante, CLI (« Calling Line Identification »), reçue de l'appel d'essai ; et
• analyser l'identification de ligne appelante, CLI, reçue de sorte que la présence du contournement (540) puisse être détectée,
**caractérisé en ce que**
- ledit système (1) comprend en outre :
• un jeu non en cascade de numéros virtuels (81) configuré de sorte que lesdits appels d'essai soient terminés dans un étage sur ledit abonnement de terminaison (80) ; et
• des moyens (11) configurés pour manipuler des identifications de ligne appelante, CLI, et **en ce que**
- ledit système de commande (40) est en outre configuré :
• pour utiliser ledit jeu non en cascade de numéros virtuels (81) en tant qu'appelé desdits appels d'essai ; et
• pour établir des appels d'essai vers ledit jeu de numéros virtuels (81) à partir desdits moyens (11) configurés pour manipuler des identifications de ligne appelante, CLI, par l'intermédiaire desdits moyens (10) pour émettre un appel d'essai,
- ledit jeu de numéros virtuels (81) ou de CLI manipulées étant divisé en sous-jeux qui sont utilisés consécutivement dans un ordre rotatif.

2. Système selon la revendication 1, dans lequel ledit ordre rotatif est réparti au hasard.

3. Système selon la revendication 1 ou 2, dans lequel l'usage de numéros virtuels (81) au sein desdits sous-jeux de numéros virtuels (81) est réparti au hasard.

4. Système selon une quelconque des revendications précédentes, dans lequel lesdits moyens (11) configurés pour manipuler des identifications de ligne appelante, CLI, comprennent :
- des abonnements d'utilisateur final avec la possibilité de manipuler des CLI ; ou
- un générateur d'appel connecté à un réseau de télécommunication à un niveau réseau.

5. Système selon une quelconque des revendications 1 à 4, dans lequel lesdits moyens (10) pour émettre un appel d'essai comprennent lesdits moyens (11) configurés pour manipuler des identifications de ligne appelante, CLI.

6. Système selon une quelconque des revendications 1 à 4, dans lequel lesdits moyens (11) configurés pour manipuler des identifications de ligne appelante, CLI, routent des appels d'essai par l'intermédiaire desdits moyens (10) pour émettre un appel d'essai.

7. Système selon la revendication 6, dans lequel les moyens (10) pour émettre ledit appel d'essai comprennent un abonnement d'origine (90) à un réseau d'origine (190) à l'extérieur du réseau de télécommunication (50) à l'essai, qui est configuré pour être routé vers lesdits numéros virtuels (81), et dans lequel des appels d'essai sont établis desdits moyens (11) configurés pour manipuler des identifications de ligne appelante, CLI, avec différentes identifications de ligne appelante, CLIs, audit abonnement d'origine (90) pour permettre des appels d'essai routés par l'intermédiaire du réseau d'origine (190) mais non nécessairement générer une identification de ligne appelante, CLI, identifiant le réseau d'origine (190).

8. Système selon une quelconque des revendications précédentes, dans lequel ledit jeu non en cascade de numéros virtuels (81) est implémenté sous forme de :
- multiples options de numéro d'abonné sur une seule ligne terrestre ISDN physique ;
- multiples numéros PBX sur une seule ligne PRI ISDN physique ;
- multiples numéros de réseau numérique à intégration de services d'abonné mobile sur un seul abonnement à carte SIM physique ; ou
- multiple numéros routés à une seule identité internationale de l'abonné mobile, IMSI (« International Mobile Subscriber Identity »), au moyen de la table de routage.

9. Système selon une quelconque des revendications précédentes, dans lequel ledit jeu de numéros virtuels (81) comprend un ou plusieurs des éléments suivants :
- des numéros réutilisés et non utilisés ;
- des numéros non consécutifs ; et
- des numéros à partir de multiples zones géographiques dans le cas d'un réseau de lignes terrestres ou de multiples préfixes de réseau dans le cas de réseaux mobiles.

10. Système selon une quelconque des revendications précédentes, dans lequel ledit jeu de numéros virtuels (81) ou de CLI manipulées est renouvelé régulièrement.

11. Système selon une quelconque des revendications précédentes, dans lequel ledit abonnement de terminaison (80) est configuré avec une annulation de refus d'identification de ligne appelante, CLIRO (« Calling Line Identification Restriction Override »).
